# EUROPEAN PATENT SPECIFICATION

(11) **EP 2 747 507 B1**
(45) Date of publication and mention of the grant of the patent: **25.03.2015**
(21) Application number: 12198806.7
(22) Date of filing: 21.12.2012
(51) Int. Cl.: H04W 72/12

(54) **Scheduling for devices with limited signal processing capability**
Planung von Vorrichtungen mit eingeschränkter Signalverarbeitungsaktivität
Programmation de dispositifs à capacité de traitement de signal limité

(43) Date of publication of application: 25.06.2014
(73) Proprietor: Telefonaktiebolaget L M Ericsson (publ), 164 83 Stockholm (SE)
(72) Inventor: Hill, Johan, SE-224 74 LUND (SE); Lindoff, Bengt, SE-237 35 BJÄRRED (SE); Stala, Michal, SE-227 31 LUND (SE); Wilhelmsson, Leif, SE-247 55 DALBY (SE)
(74) Representative: Åkerman, Mårten Lennart

(56) References cited:
- WO-A1-2012/104630
- WO-A2-2011/108891
- US-A1- 2007 026 881

## Description

### Technical Field

The present invention relates generally to the field of scheduling of transmission resources in cellular communication systems. More particularly, it relates to scheduling for devices with limited signal processing capability.

### Background

Generally, the complexity of wireless communication devices (e.g. mobile terminals) for cellular communication systems is increasing with requirements of increasing throughput and decreasing latency. Various techniques (e.g. multiple input multiple output (MIMO), high order modulation, carrier aggregation, etc) are applied alone or in combination to achieve such requirements.

On the other hand, applications with low requirements on throughput are also emerging for cellular communication systems. Such applications are often referred to as Machine-to-Machine (M2M) communication or Machine Type Communication (MTC). Devices intended for MTC are typically designed considering properties such as low cost, low power consumption, and/or low throughput ability. One benefit of these considerations is that they enable large device volumes in MTC applications (e.g. smart metering (electricity, water, etc), fleet tracking, and patient monitoring).

A problem for MTC applications is that it may be cumbersome to design a MTC device at low cost that complies with modem cellular communication standards while having low power consumption. To accommodate MTC, some telecommunication standards may therefore consider special requirements for MTC devices.

For example, the maximum bandwidth and throughput in UMTS LTE (Universal Mobile Telecommunication Standard - Long Term Evolution) is 20MHz per frequency band and ~150Mbit/s per frequency band when using code rates close to one and MIMO. A device should is required to be able to receive one sub-frame per 1 ms and the physical layer round-trip time (RTT) requirement (i.e. the time from reception of the sub-frame to transmission of an acknowledgement or non-acknowledgement) is 3 ms. Meanwhile, discussions in 3GPP (Third Generation Partnership Program - the organization advocating UMTS LTE) regarding M2M mention bandwidth and throughput requirements of 1.4MHz and ∼1Mbit/s, respectively. It may be noted that the respective scaling in bandwidth and throughput are not proportional to each other. This disproportionality may be reduced by other adjustments (e.g. removing MIMO functionality, using only low code rates, and/ restricting the order of modulation). However, these measures may not be sufficient to be able to design a low cost, low power MTC device.

WO 2012/104630 mentions MTC devices and discloses a base station that allocates transmission resources provided by a first group of OFDM (Orthogonal Frequency Division Multiplex) sub-carriers within a first frequency band to mobile terminals of a first type and allocates transmission resources provided by a second group of OFDM sub-carriers within a second frequency band to mobile terminals of a second type. Thus, allocation of transmission resources may be adapted for MTC devices. However, the allocation principles suggested therein severely restricts the flexibility of the base station scheduler.

Therefore, there is a need for alternative methods and arrangements that enable design of cellular standard compliant, low cost, low power MTC devices.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

It is an object of some embodiments to obviate at least some of the above disadvantages and to provide methods and arrangements for M2M applications. Some embodiments provide a flexible scheduling approach that is suitable to apply for wireless communication devices with limited signal processing capability.

According to a first aspect, a method of a network node of a cellular communication system adapted to communicate with a wireless communication device is provided.

The method comprises acquiring a signal processing capability of the wireless communication device, scheduling one or more first time-frequency resources of a first transmission occasion for transmission to the wireless communication device based on the acquired signal processing capability, wherein the first transmission occasion is comprised in a first occasion of communication between the network node and the wireless communication device, and determining a length of a time interval between the first and a second occasion of communication between the network node and the wireless communication device based on the acquired signal processing capability.

The scheduling and length determination comprises, if the acquired signal processing capability does not fulfill a signal processing capability requirement, determining the length of the time interval such that a first length is selected if the scheduled one or more first time-frequency resources have a first frequency span and a second length is selected if the scheduled one or more first time-frequency resources have a second frequency span, wherein the first length exceeds the second length and the first frequency span exceeds the second frequency span.

The method also comprises transmitting data to the wireless communication device during the first transmission occasion using the scheduled one or more first time-frequency resources, and performing an operation of communication between the network node and the wireless communication device during the second occasion of communication.

The transmission occasion may, for example, comprise or consist of a radio frame of a UMTS LTE specification.

The signal processing capability may, for example, be a measure of the maximum bandwidth per time unit that can be processed by the wireless communication device. It may be expressed as a limited number of discrete levels (each represented by e.g. a resource block per second value, a resource block per radio frame value, or any other suitable representation) or as a continuum. A mapping from a signal processing capacity representation (e.g. a bit pattern, or a number of parameter values) to a corresponding signal processing value may be implemented in a look-up table or a calculation unit. As will be seen in the following examples, the signal processing capability may be explicitly or implicitly communicated from the wireless communication device to the network node. For example, the wireless communication device may explicitly and directly communicate the signal processing capability value, or it may explicitly communicate one or more parameter values representing the signal processing capability. Alternatively or additionally, the wireless communication device may transmit an indication to the network node that it cannot handle the current scheduling. For example, the network node may determine the signal processing capability from a non-acknowledgement rate in response messages communicated by the wireless communication device. A non-acknowledgement rate (or non-acknowledgement frequency) may be defined as #NAK / (#ACK + #NAK), where #NAK denotes the number of non-acknowledgements in an ensemble of response message transmitted (e.g. consecutively) from the wireless communication device and #ACK denotes the number of acknowledgements in the ensemble.

Alternative notations of the signal processing capability comprise computational capability, number crunching capability, signal processing power, computational power, number crunching power, signal processing performance, computational performance, and number crunching performance.

That the signal processing capability does not fulfill a signal processing capability requirement may be defined as the signal processing capability falling below a signal processing capability threshold. That the signal processing capability does not fulfill a signal processing capability requirement may, alternatively or additionally, be defined as the wireless communication device being of a certain type, where the certain type comprises MTC devices.

According to some embodiments, acquiring the signal processing capability of the wireless communication device may comprise receiving a capability message from the wireless communication device, the capability message comprising information indicative of the signal processing capability. For example, the capability message may comprise the signal processing capability or a representation thereof, one or more signal processing parameters of the wireless communication device or information indicative of one or more signal processing parameters of the wireless communication device. The one or more signal processing parameters may comprise one or more of a capacity of a fast Fourier transform implementation of the wireless communication device, a processing capacity of a decoder (e.g. a Viterbi decoder, or a turbo decoder) of the wireless communication device, a channel estimation capacity (e.g. an interpolation rate of the channel estimator) of the wireless communication device, a processing capacity of a channel compensation unit (e.g. an equalizer, a channel combiner, a RAKE-combiner, or similar) of the wireless communication device, a battery level of the wireless communication device, a UE (user equipment) category, a transport block size, and a data rate.

In some embodiments, acquiring the signal processing capability of the wireless communication device may comprise receiving a plurality of response messages from the wireless communication device, each response message comprising an acknowledgement or a non-acknowledgement, and determining the signal processing capability based on a frequency of non-acknowledgements in the received plurality of response messages.

In some embodiments, the length determination may comprise mapping the signal processing capacity and frequency span of the scheduled resources to a time interval length (e.g. via a look-up table or calculation unit).

Performing the operation of communication between the network node and the wireless communication device during the second occasion of communication may, according to some embodiments, comprise scheduling one or more second time-frequency resources of a second transmission occasion for transmission to the wireless communication device, wherein the second transmission occasion is comprised in the second occasion of communication, and transmitting data to the wireless communication device during the second transmission occasion using the scheduled one or more second time-frequency resources. Thus, a time between consecutive transmissions to the wireless communication device may be defined by the length of the time interval.

Alternatively or additionally, performing the operation of communication between the network node and the wireless communication device during the second occasion of communication may, in some embodiments, comprises receiving a response message associated with the first transmission occasion from the wireless communication device during the second occasion of communication, the response message comprising an acknowledgement or a non-acknowledgement. Thus, a round-trip time related to the first transmission occasion may be defined by the length of the time interval.

A second aspect is a method of a wireless communication device adapted to communicate with a network node of a cellular communication system.

The method comprises transmitting information indicative of a signal processing capability of the wireless communication device, receiving (from the network node) a scheduling of one or more first time-frequency resources of a first reception occasion, wherein the first reception occasion is comprised in a first occasion of communication between the network node and the wireless communication device, and receiving data from the network node during the first reception occasion in the scheduled one or more first time-frequency resources.

The method also comprises determining a length of a time interval between the first and a second occasion of communication between the network node and the wireless communication device, and performing an operation of communication between the network node and the wireless communication device during the second occasion of communication. The length determination comprises, if the signal processing capability does not fulfill a signal processing capability requirement, determining the length of the time interval such that a first length is selected if the scheduled one or more first time-frequency resources have a first frequency span and a second length is selected if the scheduled one or more first time-frequency resources have a second frequency span, wherein the first length exceeds the second length and the first frequency span exceeds the second frequency span.

According to some embodiments, transmitting information indicative of a signal processing capability of the wireless communication device may comprise transmitting a capability message, the capability message comprising the information. For example, the capability message may comprise the signal processing capability or a representation thereof, one or more signal processing parameters of the wireless communication device or information indicative of one or more signal processing parameters of the wireless communication device. Alternatively or additionally, transmitting information indicative of a signal processing capability may comprise transmitting a plurality of response messages, each response message comprising an acknowledgement or a non-acknowledgement. In such embodiments, the network node may determine the signal processing capability based on a frequency of non-acknowledgements in the plurality of response messages.

In some embodiments, the length determination may comprise mapping the signal processing capacity and frequency span of the scheduled resources to a time interval length (e.g. via a look-up table or calculation unit). Alternatively, a length determined by the network node may be signaled to the wireless communication device and the length determination may comprise receiving the signaled length.

Performing the operation of communication between the network node and the wireless communication device during the second occasion of communication may, according to some embodiments, comprise receiving a scheduling of one or more second time-frequency resources of a second reception occasion from the network node, wherein the second reception occasion is comprised in the second occasion of communication, and receiving data from the network node during the second reception occasion in the scheduled one or more second time-frequency resources.

Alternatively or additionally, performing the operation of communication between the network node and the wireless communication device during the second occasion of communication may, in some embodiments, comprise transmitting a response message associated with the first reception occasion to the network node during the second occasion of communication, the response message comprising an acknowledgement or a non-acknowledgement.

Any of the methods according to the first and second aspects may, for example, be applied in a system compliant with Universal Mobile Telecommunication Standard - Long Term Evolution. Then, the one or more first time-frequency resources of the first transmission occasion may, for example, consist of one or more sub-frames of a radio frame in one or more resource blocks, wherein the one or more sub-frames are adjacent in a time domain and the one or more resource blocks are adjacent in a frequency domain. Alternatively, the one or more first time-frequency resources of the first transmission occasion may, for example, consist of one or more orthogonal frequency division multiplex symbols of a radio frame in one or more resource blocks, wherein the one or more symbols are adjacent in a time domain and the one or more resource blocks are adjacent in a frequency domain.

A third aspect is a computer program product comprising a computer readable medium, having thereon a computer program comprising program instructions. The computer program is loadable into a data-processing unit and adapted to cause execution of the method according to any of the first and second aspects when the computer program is run by the data-processing unit.

A fourth aspect is an arrangement of a network node of a cellular communication system adapted to communicate with a wireless communication device. The arrangement comprises a signal processing capability detector, a scheduler, a time interval length determiner and a transceiver.

The signal processing capability detector is adapted to acquire a signal processing capability of the wireless communication device.

The scheduler is adapted to schedule one or more first time-frequency resources of a first transmission occasion for transmission to the wireless communication device based on the acquired signal processing capability, wherein the first transmission occasion is comprised in a first occasion of communication between the network node and the wireless communication device.

The time interval length determiner is adapted to determine, based on the acquired signal processing capability, a length of a time interval between the first and a second occasion of communication between the network node and the wireless communication device. If the acquired signal processing capability does not fulfill a signal processing capability requirement, the length of the time interval is determined such that a first length is selected if the scheduled one or more first time-frequency resources have a first frequency span and a second length is selected if the scheduled one or more first time-frequency resources have a second frequency span, where the first length exceeds the second length and the first frequency span exceeds the second frequency span. The time interval length determiner may be comprised in the scheduler according to some embodiments.

The transceiver is adapted to transmit data to the wireless communication device during the first transmission occasion using the scheduled one or more first time-frequency resources, and perform an operation of communication between the network node and the wireless communication device during the second occasion of communication.

In some embodiments, the transceiver may be adapted to receive a capability message from the wireless communication device, and the signal processing capability detector may be adapted to determine the signal processing capability based on the received capability message.

The transceiver may be further adapted to receive a plurality of response messages from the wireless communication device each response message comprising an acknowledgement or a non-acknowledgement, and the signal processing capability detector may be adapted to determine the signal processing capability based on a frequency of non-acknowledgements in the received plurality of response messages.

According to some embodiments, the transceiver may be adapted to perform the operation of communication between the network node and the wireless communication device during the second occasion of communication by transmitting data to the wireless communication device during a second transmission occasion using one or more second scheduled time-frequency resources of the second transmission occasion, wherein the second transmission occasion is comprised in the second occasion of communication. Alternatively or additionally, the transceiver may be adapted to perform the operation of communication between the network node and the wireless communication device during the second occasion of communication by receiving a response message associated with the first transmission occasion from the wireless communication device during the second occasion of communication, the response message comprising an acknowledgement or a non-acknowledgement.

A fifth aspect is a network node of a cellular communication system adapted to communicate with a wireless communication device, the network node comprising the arrangement of the fourth aspect.

A sixth aspect provides an arrangement of a wireless communication device adapted to communicate with a network node of a cellular communication system. The arrangement comprises one or more signal processing units, a transceiver and a time interval determiner.

The one or more signal processing units are adapted to perform operations in relation to a received signal, the one or more signal processing units defining a signal processing capability of the wireless communication device.

The transceiver is adapted to transmit information indicative of the signal processing capability. The transceiver is also adapted to receive, from the network node, a scheduling of one or more first time-frequency resources of a first reception occasion, wherein the first reception occasion is comprised in a first occasion of communication between the network node and the wireless communication device, and receive data from the network node during the first reception occasion in the scheduled one or more first time-frequency resources. The transceiver is further adapted to perform an operation of communication between the network node and the wireless communication device during a second occasion of communication.

The time interval length determiner is adapted to determine a length of a time interval between the first and second occasion of communication between the network node and the wireless communication device, wherein, if the signal processing capability does not fulfill a signal processing capability requirement, the length of the time interval is determined such that a first length is selected if the scheduled one or more first time-frequency resources have a first frequency span and a second length is selected if the scheduled one or more first time-frequency resources have a second frequency span, where the first length exceeds the second length and the first frequency span exceeds the second frequency span.

A seventh aspect is a wireless communication device comprising the arrangement according to the sixth aspect.

In some embodiments, the third, fourth, fifth, sixth and seventh aspects may additionally have features identical with or corresponding to any of the various features as explained above for the first and second aspects.

It should be noted that - even if user equipments and MTC devices are used herein to illustrate various examples - embodiments may be equally applicable to other devices such as, for example, a modem, a smartphone, a tablet, and a sensor.

An advantage of some embodiments is that very low cost and/or low power consumption devices may be implemented if the embodiments are applied since the signal processing requirements may be more relaxed.

Another advantage of some embodiments is that flexible scheduling is provided, as opposed to e.g. a fixed scheduling restriction.

Yet an advantage of some embodiments is that the scheduling flexibility may have very fine granularity, e.g. down to individual OFDM symbols.

### Brief Description of the Drawings

Further objects, features and advantages will appear from the following detailed description of embodiments, with reference being made to the accompanying drawings, in which:
Fig. 1 is a flowchart illustrating example method steps according to some embodiments;
Fig. 2 is a flowchart illustrating example method steps according to some embodiments;
Fig. 3 is a combined flowchart and signaling diagram illustrating example method steps and signaling according to some embodiments;
Fig. 4 is a schematic block diagram illustrating an example arrangement of a network node according to some embodiments;
Fig. 5 is a schematic block diagram illustrating an example arrangement of a wireless communication device according to some embodiments;
Fig. 6 is a schematic diagram illustrating example processing in a wireless communication device according to some embodiments;
Fig. 7 is a schematic block diagram illustrating an example receiver processing arrangement of a wireless communication device according to some embodiments;
Figs. 8A-G are schematic diagrams illustrating example resource allocations according to some embodiments; and
Fig. 9 is a schematic drawing illustrating an example computer program product according to some embodiments.

### Detailed Description

In the following, embodiments will be described where a network scheduling approach is provided. The scheduling approach involves a trade-off between a frequency span of time-frequency resources scheduled to a particular wireless communication device and a time interval between occasions of communication between the scheduling network node and the wireless communication device. Thus, if the frequency span is large the time interval until the next communication event should be large and vice versa.

In one example, the scheduler may chose between a first approach and a second approach where the first approach comprises using any time-frequency resource distribution for each transmission occasion but allowing a longer round-trip time (RTT, i.e. the time data reception to transmission of an acknowledgement or non-acknowledgement) and/or time to next transmission occasion and the second approach comprises using a time-frequency resource distribution that is restricted in frequency span for each transmission occasion and the normal round-trip time and/or time to next transmission occasion.

The scheduling approach is particularly applicable when the wireless communication device is a device with low signal processing capability, such as an MTC device. Furthermore, the scheduling approach is particularly applicable to OFDM systems, such as UMTS LTE.

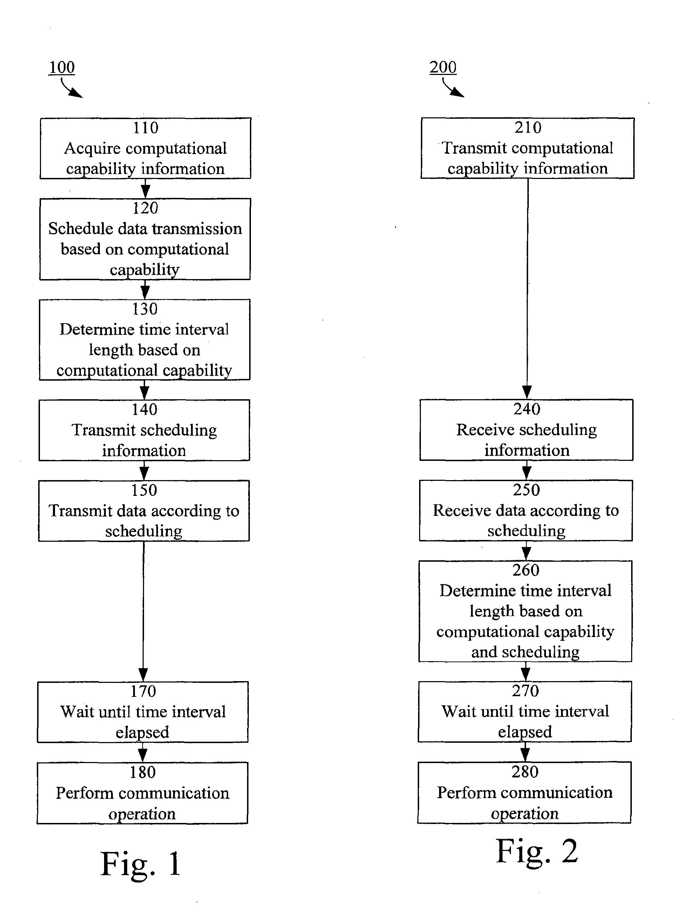

Figure 1 illustrates an example method 100 that may be performed by a network node of a cellular communication system.

A computational capability (e.g. a signal processing capability) of a wireless communication device is acquired in step 110. The capability may be achieved by explicit signaling (e.g. of the capability or of thereto related parameters) from the wireless communication device or implicitly (e.g. by determining a non-acknowledgement rate of response messages from the wireless communication device).

Transmission resources related to the wireless communication device are scheduled for a first transmission occasion in step 120 based on the computational capability of step 110. In step 130, the length of a time interval between the first transmission occasion and a second communication occasion is determined based on the computational capacity of step 110. Steps 120 and 130 may be performed in sequence (in any order) or in parallel. If the computational capability does not fulfill a capability requirement (e.g. if the wireless communication device is an MTC device), the length of the time interval is determined such that a first length is selected if the scheduled resources have a first frequency span and a second length is selected if the scheduled resources have a second frequency span, where the first length exceeds the second length and the first frequency span exceeds the second frequency span.

Then, information regarding the scheduling is transmitted to the wireless communication device in step 140, and data is transmitted to the wireless communication device according to the scheduling in step 150. In some embodiments (e.g. for UMTS LTE) the scheduling information and the data are comprised in a single transmission package.

After a time interval when the determined length has passed (step 170), a second communication operation is performed in step 180. The second communication operation may, for example, be a second data transmission (compare with step 140 and 150) and/or a reception of an acknowledgement or non-acknowledgement related to the data transmission of step 150.

Figure 2 illustrates an example method 200 that may be performed by a wireless communication device in a cellular communication system.

Information regarding a computational capability of the wireless communication device is transmitted to the serving network in step 210. The transmission may comprise explicit or implicit signaling as explained in connection with Figure 1.

Scheduling information is received from the network in step 240, and data is received according to the scheduling in step 250. In some embodiments (e.g. for UMTS LTE) the scheduling information and the data are comprised in a single transmission package.

In step 260, the length of a time interval until a second communication occasion is determined based on the computational capacity of step 210 and the scheduling of step 240. Step 260 may be performed any time after step 240, e.g. in parallel to step 250 or thereafter (as illustrated in Figure 2). Typically, the length of the time interval is determined such that a first length is selected if the scheduled resources have a first frequency span and a second length is selected if the scheduled resources have a second frequency span, where the first length exceeds the second length and the first frequency span exceeds the second frequency span. The length determined in step 260 is associated to the length determined in step 130 of Figure 1 such that the lengths are equal when compensated for the propagation time between the network node and the wireless communication device. The determination in step 260 may either comprise a determination based on the capability and the received scheduling information, or may comprise receiving a length value explicitly signaled from the network.

After a time interval when the determined length has passed (step 270), a second communication operation is performed in step 280. The second communication operation may, for example, be a second data reception (compare with step 240 and 250) and/or a transmission of an acknowledgement or non-acknowledgement related to the data reception of step 250.

Figure 1 illustrates an example method 300 that may be performed by a network node (NW node) 301 of a cellular communication system, an example method 400 that may be performed by wireless communication device (user equipment - UE) 401 in a cellular communication system and a corresponding example signaling diagram. The steps of the example method 300 are similar to the corresponding steps of method 100 as described in connection to Figure 1 as well as the steps of the example method 400 are similar to the corresponding steps of method 200 as described in connection to Figure 2, and those figures may be referred to for further details and examples.

The UE 401 transmits a message 411 comprising information regarding a computational capability to the serving network in step 410, and the message is received by the network node 301 in step 310.

The network node 301 schedules transmission resources related to the wireless communication device for a first transmission occasion in step 320 based on the computational capability of step 310. In step 330, the length of a time interval between the first transmission occasion and a second communication occasion is determined based on the computational capacity of step 310.

The network node 301 transmits scheduling information and data (illustrated by signal 351) to the UE 401 in step 350, which is received by the UE 401 in step 450.

In step 470, the UE determines a length corresponding to that of step 330, and after a time interval when the determined length has passed (steps 370 and 470), a second communication operation is performed (steps 381, 383, 384, 481, 484). The second communication operation may, for example, be a second data transmission by the network node 301 and/or a transmission of an acknowledgement or non-acknowledgement by the UE 401.

Step 481 illustrates a transmission by the UE 401 of a message 482 comprising an acknowledgement or non-acknowledgement related to the reception of step 450, which message 482 is received by the network node 301 in step 381.

Step 483 illustrates a new scheduling of data by the network node 301 and step 384 illustrates a transmission by the network node 301 of corresponding scheduling information and data (illustrated by signal 385) to the UE 401, which transmission 385 is received by the UE 401 in step 484.

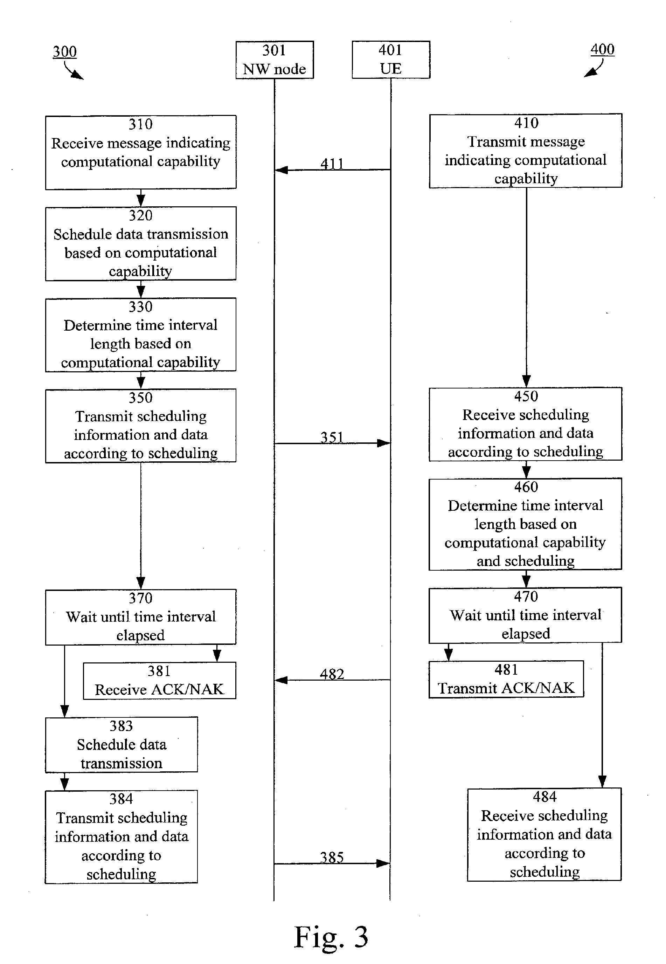

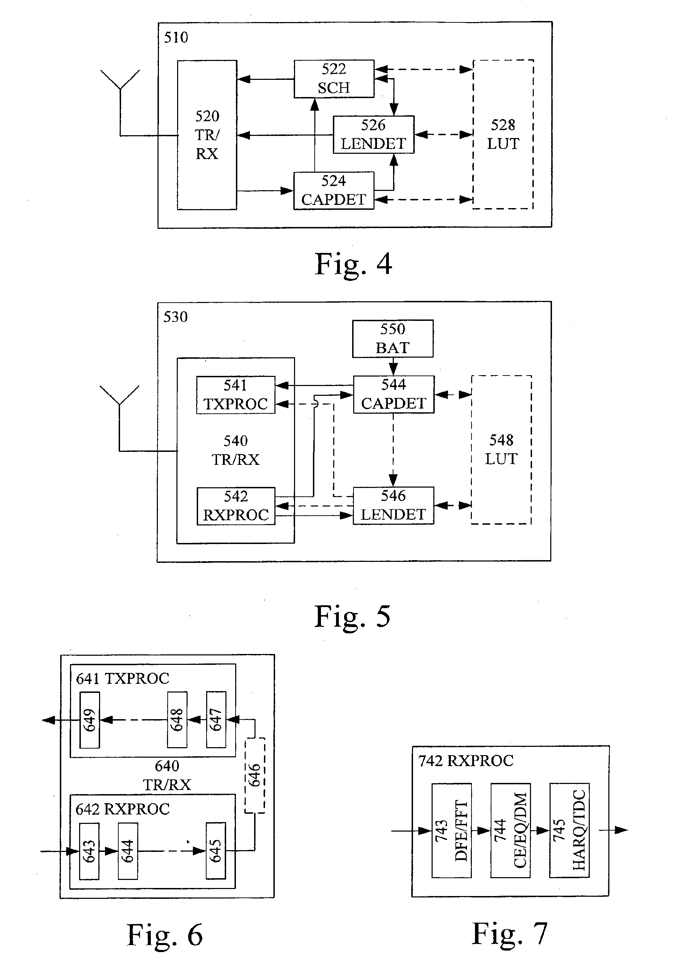

Figure 4 illustrates an example arrangement 510 of a network node. The arrangement 510 may, for example, be adapted to perform steps according to any of the methods 100 and 300 described in connection to Figures 1 and 3 respectively.

The arrangement 510 comprises a transceiver (TX/RX) 520, a scheduler (SCH) 522, a length determiner (LENDET) 526, a capability detector (CAPDET) 524 and optionally one or several look-up tables (LUT) 528. The length determiner 526 may or may not be comprised in the scheduler 522.

The capability detector 524 acquires a capability of a wireless communication device based on signals received from the wireless communication device by the transceiver 520 (compare with steps 110 and 310). The capability detector 524 may use the look-up table 528 in its detection as has been explained above, e.g. to map received parameters or a non-acknowledgement frequency to a capability value.

The scheduler 522 allocates transmission resources based on the capability and the length determiner 526 determines a length of a time interval between a first and second communication occasion based on the capability (compare with steps 120, 130, 320 and 330). The scheduler 522 and the length determiner 526 may use the look-up table 528 in their operation as has been explained above, e.g. to map a capability value to allowed combinations of interval length and frequency span of allocation.

The transceiver 520 transmits scheduling information and data to the wireless communication device according to the allocation by the scheduler 522 (compare with steps 140, 150 and 350).

When the time interval has passed (compare with step 170 and 370), the transceiver 520 and possibly also the scheduler 522 are involved in performing a second communication operation (compare with steps 180, 381, 383 and 384). For example, a timer (not shown) may keep track of the time interval.

Figure 5 illustrates an example arrangement 530 of a wireless communication device. The arrangement 530 may, for example, be adapted to perform steps according to any of the methods 200 and 400 described in connection to Figures 2 and 3, respectively.

The arrangement 530 comprises a transceiver (TX/RX) 540 with a receive signal processor (RXPROC) 542 and a transmit signal processor (TXPROC) 541, a length determiner (LENDET) 546, a capability determiner (CAPDET) 544, a power source such as a battery 550 and optionally one or several look-up tables (LUT) 548.

The capability determiner 544 determines a capability of a wireless communication device. The capability may be constant (e.g. depending only on the hardware implementation of the arrangement 530, such as the parameters of the receive signal processing chain in 542) or dynamically changing (e.g. based on a charge level of the battery 550, a current operating point (e.g. voltage and clock frequency) of processing components, a current temperature of the components, a UE state of the wireless communication device and/or on an experienced channel spread or other environmental parameters). The capability determiner 544 may use the look-up table 548 in the determination, e.g. to map a battery level and/or a channel spread to a corresponding capability.

The transceiver 540 transmits the capability to the network (compare with steps 210 and 410). Transmission may be repeated (periodically or on event basis) if needed. As mentioned before the transmission of the capability may be explicit (as indicated in Figure 5) or implicit as a non-acknowledgement frequency. In the latter case, the capacity determiner 544 would be optional. The transceiver 540 also receives scheduling information and data from the network (compare with steps 240, 250, 450).

The length determiner 546 determines a length of a time interval between a first and second communication occasion based on the capability and the received scheduling information (compare with steps 260 and 460). The length determiner 546 may use the look-up table 548 in its operation as has been explained above, e.g. to map a capability value and a frequency span of allocation to a corresponding interval length. In some embodiments, the length of the time interval is explicitly signaled by the network. In such embodiments, the length determiner 546 determines the length based on the received signaling.

When the time interval has passed (compare with step 270 and 470), the transceiver 540 performs a second communication operation (compare with steps 280, 481 and 484). For example, a timer (not shown) may keep track of the time interval.

It should be noted that the capability determiner 544 is typically different in its operation from the capability detector 524 of Figure 4. The length detectors 526 of Figure 4 and the length detector 546 may be equal or similar in implementation, but may also differ according to some embodiments.

Figure 6 illustrates an example signal flow of processing blocks in a transceiver of a wireless communication device. The example signal flow is illustrated in relation to a transceiver (TX/RX) 640 comprising a receive signal processor (RXPROC) 642 and a transmit signal processor (TXPROC) 641. The transceiver 640 may, for example, be the transceiver 540 of Figure 5.

It can be seen from Figure 6 how a received down-link signal (e.g. a sub-frame of UMTS LTE) is sequentially processed in a number of receiver chain processing blocks 643, 644, 645 before it reaches a point 646 where a response (e.g. an acknowledgement or a non-acknowledgement) to the received down-link signal may be produced and how the response is sequentially processed in a number of transmit chain processing blocks 647, 648, 649 before it may be transmitted. These processing steps (together with the propagation time between the network node and the wireless communication device) produce a delay which should not be longer than the allowed round-trip time.

Figure 7 illustrates a few examples of receiver chain processing blocks of a receive signal processor (RXPROC) 742. The receive signal processor 742 may, for example, be the receive signal processor 642 of Figure 6 or the receive signal processor 542 of Figure 5. The receiver chain processing blocks illustrated in Figure 7 comprise a digital front end and fast Fourier transform (DFE/FFT) 743, a channel estimator, equalizer and de-mapper (CH/EQ/DE) 744 and a hybrid automatic repeat request processor and turbo decoder (HARQ/TDC) 745. These are typical processing blocks, the processing capabilities of which may define the signal processing capability of a wireless communication device. For example, if each block is given a capability classification where a low classification number corresponds to a high processing capability, the round-trip time may be based on a combined classification number of the three processing blocks and a receive rate may be based on a the maximum classification number among the three processing blocks.

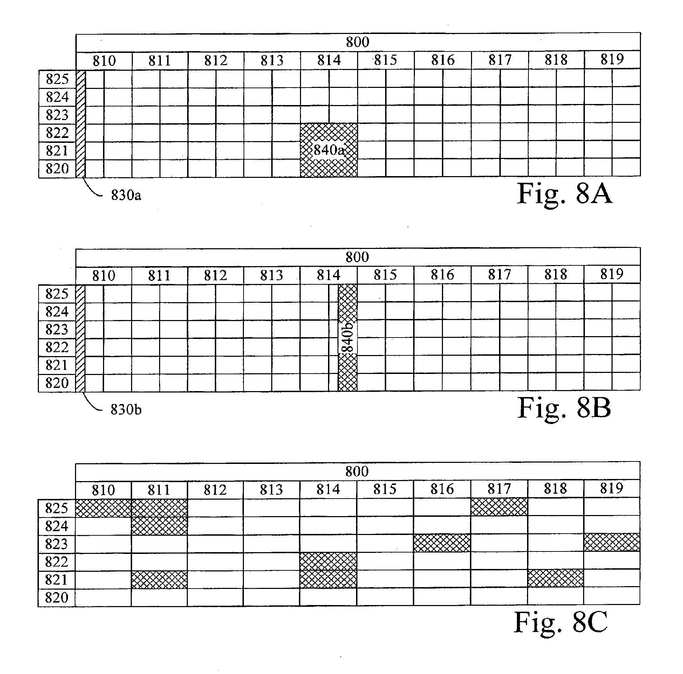

Figure 8A-G illustrate various scheduling (resource allocation) of a wireless communication device in a radio frame 800 of a UMTS LTE system. The radio frame is divided into sub-frames 810, 811, 812, 813, 814, 815, 816, 817, 818, 819, each of which is divided into two slots. Each slot is then divided into 7 OFDM symbols extending over a number of resource blocks 820, 821, 822, 823, 824, 825.

A number of non-limiting examples of restrictive resource allocation that may be suitable for MTC devices will now be given. As has been mentioned earlier, the embodiments typically provide a dynamic scheduling where allocation pattern and a time between communication occasions (e.g. manifested by a varying time between transmissions from the network node to the wireless communication device and/or by a varying round-trip time, RTT) are jointly restricted.

One restriction could, for example, be that only certain sub-frames are allowed to be scheduled (see e.g. Figure 8A). In another example, the granularity of the restriction could even be lower by also restricting on slot or even symbol level (see e.g. Figure 8B). A further example includes restricting based on resource blocks (i.e. sub-carriers, see e.g. Figure 8A), which would restrict the bandwidth that the receiver needs to cover when receiving the data. (The scheduling information - allocation information - may be sent at an earlier occasion, so the receiver does not have to decode the control information for each reception occasion.)

Figure 8A illustrates an allocation suitable for an MTC device. In this example, data 840a is located only in three resource blocks 820, 821, 822 in one sub-frame 814. The control channel 830a typically comprises allocation information.

Figure 8B illustrates an allocation that may also be suitable for an MTC device. In this example, data 840b is located in six resource blocks 820, 821, 822, 823, 824, 825 in only some OFDM symbols of one slot of one sub-frame 814. The control channel 830b is also shown.

Figure 8C illustrates an example non-restricted allocation. Using this allocation, it would be cumbersome or impossible for a MTC device to process the time-frequency area used for transmission in time. For example, if Figure 8C illustrates a 1.4 MHz UMTS LTE radio frame, an FFT of the wireless communication device would be required to operate on at least 7 sub-frames and a channel estimator would need to cover 6 resource blocks at each sub-frame (totally 60 resource blocks per radio frame) to be able to do the needed extensive interpolation between the scattered allocations.

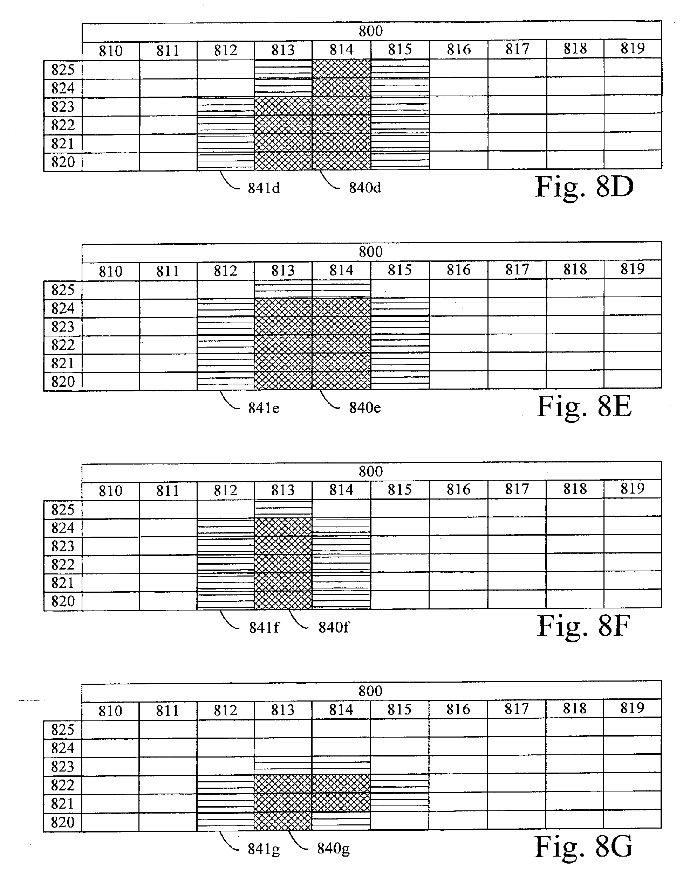

Figure 8D illustrates a restricted allocation 840d for the same amount of data as in Figure 8C. This allocation is much more compact than the allocation of Figure 8C, which provides an MTC device with a possibility to perform the required processing. The FFT of the wireless communication device would only be required to operate on 2 sub-frames and a channel estimator would need to cover totally 22 resource blocks 840d, 841d per radio frame to be able to do adequate extrapolation.

Figure 8E illustrates another restricted allocation 840e for the same amount of data as in Figure 8C. This allocation is also much more compact than the allocation of Figure 8C, which provides an MTC device with a possibility to perform the required processing. The FFT of the wireless communication device would only be required to operate on 2 sub-frames and a channel estimator would need to cover totally 22 resource blocks 840e, 841e per radio frame to be able to do adequate extrapolation.

Figure 8F illustrates a restricted allocation 840f for half the amount of data compared to Figure 8C. This allocation is also compact, which provides an MTC device with a possibility to perform the required processing. The FFT of the wireless communication device would only be required to operate on 1 sub-frame and a channel estimator would need to cover totally 16 resource blocks 840f, 841f per radio frame to be able to do adequate extrapolation.

Figure 8G also illustrates a restricted allocation 840g for half the amount of data compared to Figure 8C. This allocation is also compact, which provides an MTC device with a possibility to perform the required processing. The FFT of the wireless communication device would only be required to operate on 2 sub-frames and a channel estimator would need to cover totally 13 resource blocks 840g, 841g per radio frame to be able to do adequate extrapolation.

As explained before, the considerations illustrated in Figures 8A-G may be combined with considerations of a round-trip time and/or of a time to the next transmission based on a frequency span. For example, the configuration in Figure 8F has a larger frequency span (all resource blocks need to be processed for at least one sub-frame) than the configuration of Figure 8G. On the other hand, the configuration in Figure 8G is more spread out in time (4 sub-frames need processing) than the configuration in Figure 8F. This corresponds to that there is a longer time interval between transmission occasions in the configuration of Figure 8F than in that of Figure 8G.

The described embodiments and their equivalents may be realized in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of this disclosure.

Embodiments may appear within an electronic apparatus (such as a wireless communication device or a network node) comprising circuitry/logic or performing methods according to any of the embodiments.

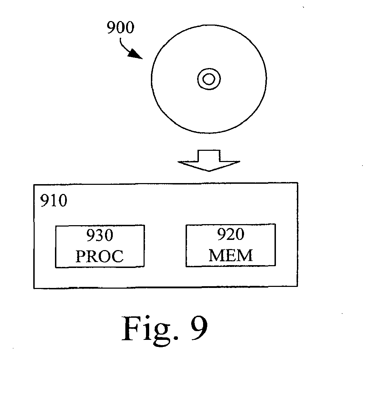

According to some embodiments, a computer program product comprises a computer readable medium such as, for example, a diskette or a CD-ROM 900 as illustrated in Figure 9. The computer readable medium may have stored thereon a computer program comprising program instructions. The computer program may be loadable into a data-processing unit 930, which may, for example, be comprised in an electronic apparatus 910. When loaded into the data-processing unit 930, the computer program may be stored in a memory 920 associated with or integral to the data-processing unit 930. According to some embodiments, the computer program may, when loaded into and run by the data-processing unit, cause the data-processing unit to execute method steps according to, for example, the methods shown in any of the Figures 1, 2 and 3.

Reference has been made herein to various embodiments. However, a person skilled in the art would recognize numerous variations to the described embodiments that would still fall within the scope of the claims. For example, the method embodiments described herein describes example methods through method steps being performed in a certain order. However, it is recognized that these sequences of events may take place in another order without departing from the scope of the claims. Furthermore, some method steps may be performed in parallel even though they have been described as being performed in sequence.

In the same manner, it should be noted that in the description of embodiments, the partition of functional blocks into particular units is by no means limiting. Contrarily, these partitions are merely examples. Functional blocks described herein as one unit may be split into two or more units. In the same manner, functional blocks that are described herein as being implemented as two or more units may be implemented as a single unit without departing from the scope of the claims.

Hence, it should be understood that the details of the described embodiments are merely for illustrative purpose and by no means limiting. Instead, all variations that fall within the range of the claims are intended to be embraced therein.

## Claims

1. A method of a network node of a cellular communication system adapted to communicate with a wireless communication device, the method comprising:
acquiring (110, 310) a signal processing capability of the wireless communication device;
scheduling (120, 320), based on the acquired signal processing capability, one or more first time-frequency resources of a first transmission occasion for transmission to the wireless communication device, wherein the first transmission occasion is comprised in a first occasion of communication between the network node and the wireless communication device;
determining (130, 330), based on the acquired signal processing capability, a length of a time interval between the first and a second occasion of communication between the network node and the wireless communication device;
transmitting (150, 350) data to the wireless communication device during the first transmission occasion using the scheduled one or more first time-frequency resources; and
performing (180, 381, 383, 384) an operation of communication between the network node and the wireless communication device during the second occasion of communication;
wherein, if the acquired signal processing capability does not fulfill a signal processing capability requirement, the length of the time interval is determined such that a first length is selected if the scheduled one or more first time-frequency resources have a first frequency span and a second length is selected if the scheduled one or more first time-frequency resources have a second frequency span, where the first length exceeds the second length and the first frequency span exceeds the second frequency span.

2. The method of claim 1, wherein acquiring (110, 310) the signal processing capability of the wireless communication device comprises receiving (310) a capability message (411) from the wireless communication device, the capability message comprising information indicative of the signal processing capability.

3. The method of claim 2, wherein the capability message (411) comprises information indicative of one or more signal processing parameters of the wireless communication device.

4. The method of claim 3 wherein the one or more signal processing parameters comprise one or more of:
a capacity of a fast Fourier transform implementation of the wireless communication device;
a processing capacity of a decoder of the wireless communication device;
a channel estimation capacity of the wireless communication device;
a processing capacity of a channel compensation unit of the wireless communication device; and
a battery level of the wireless communication device.

5. The method of claim 1, wherein acquiring (110) the signal processing capability of the wireless communication device comprises:
receiving a plurality of response messages from the wireless communication device, each response message comprising an acknowledgement or a non-acknowledgement; and
determining the signal processing capability based on a frequency of non-acknowledgements in the received plurality of response messages.

6. The method of any of claims 1 to 5, wherein performing (180, 383, 384) the operation of communication between the network node and the wireless communication device during the second occasion of communication comprises:
scheduling (383) one or more second time-frequency resources of a second transmission occasion for transmission to the wireless communication device, wherein the second transmission occasion is comprised in the second occasion of communication; and
transmitting (384) data to the wireless communication device during the second transmission occasion using the scheduled one or more second time-frequency resources.

7. The method of any of claims 1 to 6, wherein performing (180, 381) the operation of communication between the network node and the wireless communication device during the second occasion of communication comprises:
receiving (381) a response message (482) associated with the first transmission occasion from the wireless communication device during the second occasion of communication, the response message (482) comprising an acknowledgement or a non-acknowledgement.

8. A method of a wireless communication device adapted to communicate with a network node of a cellular communication system, the method comprising:
transmitting (210, 410) information indicative of a signal processing capability of the wireless communication device;
receiving (240, 450), from the network node, a scheduling of one or more first time-frequency resources of a first reception occasion, wherein the first reception occasion is comprised in a first occasion of communication between the network node and the wireless communication device;
receiving (250, 450) data from the network node during the first reception occasion in the scheduled one or more first time-frequency resources;
determining (260, 460) a length of a time interval between the first and a second occasion of communication between the network node and the wireless communication device; and
performing (280, 481, 484) an operation of communication between the network node and the wireless communication device during the second occasion of communication;
wherein, if the signal processing capability does not fulfill a signal processing capability requirement, the length of the time interval is determined such that a first length is selected if the scheduled one or more first time-frequency resources have a first frequency span and a second length is selected if the scheduled one or more first time-frequency resources have a second frequency span, where the first length exceeds the second length and the first frequency span exceeds the second frequency span.

9. The method of claim 8, wherein transmitting (210, 410) information indicative of a signal processing capability of the wireless communication device comprises transmitting (410) a capability message (411) to the network node, the capability message comprising the information.

10. The method of claim 9, wherein the capability message (411) comprises information indicative of one or more signal processing parameters of the wireless communication device.

11. The method of claim 10 wherein the one or more signal processing parameters comprise one or more of:
a capacity of a fast Fourier transform implementation of the wireless communication device;
a processing capacity of a decoder of the wireless communication device;
a channel estimation capacity of the wireless communication device;
a processing capacity of a channel compensation unit of the wireless communication device; and
a battery level of the wireless communication device.

12. The method of any of claims 8 to 11, wherein performing (280, 484) the operation of communication between the network node and the wireless communication device during the second occasion of communication comprises:
receiving (484), from the network node, a scheduling of one or more second time-frequency resources of a second reception occasion, wherein the second reception occasion is comprised in the second occasion of communication; and
receiving (484) data from the network node during the second reception occasion in the scheduled one or more second time-frequency resources.

13. The method of any of claims 8 to 12, wherein performing (280, 481) the operation of communication between the network node and the wireless communication device during the second occasion of communication comprises:
transmitting (481) a response message (482) associated with the first reception occasion to the network node during the second occasion of communication, the response message (482) comprising an acknowledgement or a non-acknowledgement.

14. The method of any of claims 1 to 13 wherein the method is applied in a system compliant with Universal Mobile Telecommunication Standard - Long Term Evolution.

15. The method of claim 14 wherein the one or more first time-frequency resources of the first transmission occasion consists of one or more sub-frames of a radio frame in one or more resource blocks, the one or more sub-frames being adjacent in a time domain and the one or more resource blocks being adjacent in a frequency domain.

16. The method of claim 14 wherein the one or more first time-frequency resources of the first transmission occasion consists of one or more orthogonal frequency division multiplex symbols of a radio frame in one or more resource blocks, the one or more symbols being adjacent in a time domain and the one or more resource blocks being adjacent in a frequency domain.

17. A computer program product comprising a computer readable medium (900), having thereon a computer program comprising program instructions, the computer program being loadable into a data-processing unit (930) and adapted to cause execution of the method according to any of claims 1 through 16 when the computer program is run by the data-processing unit (930).

18. An arrangement of a network node of a cellular communication system adapted to communicate with a wireless communication device, the arrangement comprising:
a signal processing capability detector (524) adapted to acquire a signal processing capability of the wireless communication device;
a scheduler (522) adapted to schedule, based on the acquired signal processing capability, one or more first time-frequency resources of a first transmission occasion for transmission to the wireless communication device, wherein the first transmission occasion is comprised in a first occasion of communication between the network node and the wireless communication device;
a time interval length determiner (526) adapted to determine, based on the acquired signal processing capability, a length of a time interval between the first and a second occasion of communication between the network node and the wireless communication device, wherein, if the acquired signal processing capability does not fulfill a signal processing capability requirement, the length of the time interval is determined such that a first length is selected if the scheduled one or more first time-frequency resources have a first frequency span and a second length is selected if the scheduled one or more first time-frequency resources have a second frequency span, where the first length exceeds the second length and the first frequency span exceeds the second frequency span; and
a transceiver (520) adapted to:
transmit data to the wireless communication device during the first transmission occasion using the scheduled one or more first time-frequency resources; and
perform an operation of communication between the network node and the wireless communication device during the second occasion of communication.

19. The arrangement of claim 18, wherein the transceiver (520) is adapted to receive a capability message from the wireless communication device, and the signal processing capability detector (524) is adapted to determine the signal processing capability based on the received capability message.

20. The arrangement of claim 18, wherein the transceiver (520) is adapted to receive a plurality of response messages from the wireless communication device each response message comprising an acknowledgement or a non-acknowledgement, and the signal processing capability detector (524) is adapted to determine the signal processing capability based on a frequency of non-acknowledgements in the received plurality of response messages.

21. The arrangement of any of claims 18 to 20, wherein the transceiver (520) is adapted to perform the operation of communication between the network node and the wireless communication device during the second occasion of communication by transmitting data to the wireless communication device during a second transmission occasion using one or more second scheduled time-frequency resources of the second transmission occasion, wherein the second transmission occasion is comprised in the second occasion of communication.

22. The arrangement of any of claims 18 to 21, wherein the transceiver (520) is adapted to perform the operation of communication between the network node and the wireless communication device during the second occasion of communication by receiving a response message associated with the first transmission occasion from the wireless communication device during the second occasion of communication, the response message comprising an acknowledgement or a non-acknowledgement.

23. A network node of a cellular communication system adapted to communicate with a wireless communication device, the network node comprising the arrangement of any of claims 18 to 22.

24. An arrangement of a wireless communication device adapted to communicate with a network node of a cellular communication system, the arrangement comprising:
one or more signal processing units (541, 542, 643, 644, 645, 646, 647, 648, 649, 743, 744, 745) adapted to perform operations in relation to a received signal, the one or more signal processing units defining a signal processing capability of the wireless communication device;
a transceiver (540) adapted to:
transmit information indicative of the signal processing capability;
receive, from the network node, a scheduling of one or more first time-frequency resources of a first reception occasion, wherein the first reception occasion is comprised in a first occasion of communication between the network node and the wireless communication device;
receive data from the network node during the first reception occasion in the scheduled one or more first time-frequency resources; and
perform an operation of communication between the network node and the wireless communication device during a second occasion of communication;
a time interval length determiner (546) adapted to determine a length of a time interval between the first and second occasion of communication between the network node and the wireless communication device, wherein, if the signal processing capability does not fulfill a signal processing capability requirement, the length of the time interval is determined such that a first length is selected if the scheduled one or more first time-frequency resources have a first frequency span and a second length is selected if the scheduled one or more first time-frequency resources have a second frequency span, where the first length exceeds the second length and the first frequency span exceeds the second frequency span.

25. A wireless communication device comprising the arrangement according to claim 24.

## Patentansprüche

1. Verfahren eines Netzknotens eines zellularen Kommunikationssystems, der zum Kommunizieren mit einer drahtlosen Kommunikationsvorrichtung ausgelegt ist, wobei das Verfahren umfasst:
Erfassen (110, 310) einer Signalverarbeitungsfähigkeit der drahtlosen Kommunikationsvorrichtung;
Disponieren (120, 130) basierend auf der erfassten Signalverarbeitungsfähigkeit einer oder mehrerer erster Zeit-Frequenz-Ressourcen einer ersten Sendegelegenheit zur Übertragung an die drahtlose Kommunikationsvorrichtung, wobei die erste Sendegelegenheit in einer ersten Kommunikationsgelegenheit zwischen dem Netzknoten und der drahtlosen Kommunikationsvorrichtung enthalten ist;
Bestimmen (130, 330) basierend auf der erfassten Signalverarbeitungsfähigkeit einer Länge eines Zeitintervalls zwischen der ersten und einer zweiten Kommunikationsgelegenheit zwischen dem Netzknoten und der drahtlosen Vorrichtung;
Senden (150, 350) von Daten an die drahtlose Kommunikationsvorrichtung während der ersten Sendegelegenheit unter Verwendung der einen oder der mehreren disponierten ersten Zeit-Frequenz-Ressourcen; und
Durchführen (180, 381, 383, 384) eines Kommunikationsvorgangs zwischen dem Netzknoten und der drahtlosen Kommunikationsvorrichtung während der zweiten Kommunikationsgelegenheit;
wobei, wenn die erfasste Signalverarbeitungsfähigkeit eine Signalverarbeitungsfähigkeitsanforderung nicht erfüllt, die Länge des Zeitintervalls derart bestimmt wird, dass eine erste Länge ausgewählt wird, wenn die eine oder die mehreren disponierten ersten Zeit-Frequenz-Ressourcen eine erste Frequenzspanne aufweisen, und eine zweite Länge ausgewählt wird, wenn die eine oder die mehreren disponierten ersten Zeit-Frequenz-Ressourcen eine zweite Frequenzspanne aufweisen, wobei die erste Länge die zweite Länge überschreitet, und die erste Frequenzspanne die zweite Frequenzspanne überschreitet.

2. Verfahren nach Anspruch 1, wobei das Erfassen (110, 310) der Signalverarbeitungsfähigkeit der drahtlosen Kommunikationsvorrichtung ein Empfangen (310) einer Fähigkeitsnachricht (411) von der drahtlosen Kommunikationsvorrichtung umfasst, wobei die Fähigkeitsnachricht Informationen umfasst, welche die Signalverarbeitungsfähigkeit anzeigen.

3. Verfahren nach Anspruch 2, wobei die Fähigkeitsnachricht (411) Informationen umfasst, die einen oder mehrere Signalverarbeitungsparameter der drahtlosen Kommunikationsvorrichtung anzeigen.

4. Verfahren nach Anspruch 3, wobei der eine oder die mehreren Signalverarbeitungsparameter eines oder mehreres von Folgendem umfassen:
einer Kapazität der drahtlosen Kommunikationsvorrichtung zur Implementierung einer schnellen Fourier-Transformation;
einer Verarbeitungskapazität eines Decoders der drahtlosen Kommunikationsvorrichtung;
einer Kanalschätzkapazität der drahtlosen Kommunikationsvorrichtung;
einer Verarbeitungskapazität einer Kanalkompensationseinheit der drahtlosen Kommunikationsvorrichtung; und
einem Batteriestand der drahtlosen Kommunikationsvorrichtung.

5. Verfahren nach Anspruch 1, wobei das Erfassen (110) der Signalverarbeitungsfähigkeit der drahtlosen Kommunikationsvorrichtung umfasst:
Empfangen einer Mehrzahl von Antwortnachrichten von der drahtlosen Kommunikationsvorrichtung, wobei jede Antwortnachricht eine Bestätigung oder eine Nichtbestätigung umfasst; und
Bestimmen der Signalverarbeitungsfähigkeit basierend auf einer Häufigkeit von Nichtbestätigungen in der empfangenen Mehrzahl von Antwortnachrichten.

6. Verfahren nach einem der Ansprüche 1 bis 5, wobei das Durchführen (180, 383, 384) des Kommunikationsvorgangs zwischen dem Netzknoten und der drahtlosen Kommunikationsvorrichtung während der zweiten Kommunikationsgelegenheit umfasst:
Disponieren (383) einer oder mehrerer zweiter Zeit-Frequenz-Ressourcen einer zweiten Sendegelegenheit zur Übertragung an die drahtlose Kommunikationsvorrichtung, wobei die zweite Sendegelegenheit in der zweiten Kommunikationsgelegenheit enthalten ist; und
Senden (384) von Daten an die drahtlose Kommunikationsvorrichtung während der zweiten Sendegelegenheit unter Verwendung der einen oder der mehreren disponierten zweiten Zeit-Frequenz-Ressourcen.

7. Verfahren nach einem der Ansprüche 1 bis 6, wobei das Durchführen (180, 381) des Kommunikationsvorgangs zwischen dem Netzknoten und der drahtlosen Kommunikationsvorrichtung während der zweiten Kommunikationsgelegenheit umfasst:
Empfangen (381) einer Antwortnachricht (482), die mit der ersten Sendegelegenheit assoziiert ist, von der drahtlosen Kommunikationsvorrichtung während der zweiten Kommunikationsgelegenheit, wobei die Antwortnachricht (482) eine Bestätigung oder eine Nichtbestätigung umfasst.

8. Verfahren einer drahtlosen Kommunikationsvorrichtung, die zum Kommunizieren mit einem Netzknoten eines zellularen Kommunikationssystems ausgelegt ist, wobei das Verfahren umfasst:
Senden (210, 410) von Informationen, die eine Signalverarbeitungsfähigkeit der drahtlosen Kommunikationsvorrichtung anzeigen;
Empfangen (240, 450) vom Netzknoten einer Zeitplanung einer oder mehrerer erster Zeit-Frequenz-Ressourcen einer ersten Empfangsgelegenheit, wobei die erste Empfangsgelegenheit in einer ersten Kommunikationsgelegenheit zwischen dem Netzknoten und der drahtlosen Kommunikationsvorrichtung enthalten ist;
Empfangen (250, 450) von Daten vom Netzknoten während der ersten Empfangsgelegenheit in der einen oder den mehreren disponierten ersten Zeit-Frequenz-Ressourcen; und
Bestimmen (260, 460) einer Länge eines Zeitintervalls zwischen der ersten und einer zweiten Kommunikationsgelegenheit zwischen dem Netzknoten und der drahtlosen Vorrichtung; und
Durchführen (280, 481, 484) eines Kommunikationsvorgangs zwischen dem Netzknoten und der drahtlosen Kommunikationsvorrichtung während der zweiten Kommunikationsgelegenheit;
wobei, wenn die Signalverarbeitungsfähigkeit eine Signalverarbeitungsfähigkeitsanforderung nicht erfüllt, die Länge des Zeitintervalls derart bestimmt wird, dass eine erste Länge ausgewählt wird, wenn die eine oder die mehreren disponierten ersten Zeit-Frequenz-Ressourcen eine erste Frequenzspanne aufweisen, und eine zweite Länge ausgewählt wird, wenn die eine oder die mehreren disponierten ersten Zeit-Frequenz-Ressourcen eine zweite Frequenzspanne aufweisen, wobei die erste Länge die zweite Länge überschreitet, und die erste Frequenzspanne die zweite Frequenzspanne überschreitet.

9. Verfahren nach Anspruch 8, wobei das Senden (210, 410) von Informationen, die eine Signalverarbeitungsfähigkeit der drahtlosen Kommunikationsvorrichtung anzeigen, ein Senden (410) einer Fähigkeitsnachricht (411) an den Netzknoten umfasst, wobei die Fähigkeitsnachricht die Informationen umfasst.

10. Verfahren nach Anspruch 9, wobei die Fähigkeitsnachricht (411) Informationen umfasst, die einen oder mehrere Signalverarbeitungsparameter der drahtlosen Kommunikationsvorrichtung anzeigen.

11. Verfahren nach Anspruch 10, wobei der eine oder die mehreren Signalverarbeitungsparameter eines oder mehreres von Folgendem umfassen:
einer Kapazität der drahtlosen Kommunikationsvorrichtung zur Implementierung einer schnellen Fourier-Transformation;
einer Verarbeitungskapazität eines Decoders der drahtlosen Kommunikationsvorrichtung;
einer Kanalschätzkapazität der drahtlosen Kommunikationsvorrichtung;
einer Verarbeitungskapazität einer Kanalkompensationseinheit der drahtlosen Kommunikationsvorrichtung; und
einem Batteriestand der drahtlosen Kommunikationsvorrichtung.

12. Verfahren nach einem der Ansprüche 8 bis 11, wobei das Durchführen (280, 484) des Kommunikationsvorgangs zwischen dem Netzknoten und der drahtlosen Kommunikationsvorrichtung während der zweiten Kommunikationsgelegenheit umfasst:
Empfangen (484) vom Netzknoten einer Zeitplanung einer oder mehrerer zweiter Zeit-Frequenz-Ressourcen einer zweiten Empfangsgelegenheit, wobei die zweite Empfangsgelegenheit in der zweiten Kommunikationsgelegenheit enthalten ist; und Empfangen (484) von Daten vom Netzknoten während der zweiten Empfangsgelegenheit in der einen oder den mehreren disponierten zweiten Zeit-Frequenz-Ressourcen.

13. Verfahren nach einem der Ansprüche 8 bis 12, wobei das Durchführen (280, 481) des Kommunikationsvorgangs zwischen dem Netzknoten und der drahtlosen Kommunikationsvorrichtung während der zweiten Kommunikationsgelegenheit umfasst:
Senden (481) einer Antwortnachricht (482), die mit der ersten Empfangsgelegenheit assoziiert ist, an den Netzknoten während der zweiten Kommunikationsgelegenheit, wobei die Antwortnachricht (482) eine Bestätigung oder eine Nichtbestätigung umfasst.

14. Verfahren nach einem der Ansprüche 1 bis 13, wobei das Verfahren in einem System angewendet wird, das dem Universal Mobile Telecommunication Standard - Long Term Evolution entspricht.

15. Verfahren nach Anspruch 14, wobei die eine oder die mehreren ersten Zeit-Frequenz-Ressourcen der ersten Sendegelegenheit aus einem oder mehreren Unterrahmen eines Funkrahmens in einem oder mehreren Ressourcenblöcken bestehen, wobei der eine oder die mehreren Unterrahmen in einem Zeitbereich benachbart sind, und der eine oder die mehreren Ressourcenblöcke in einem Frequenzbereich benachbart sind.

16. Verfahren nach Anspruch 14, wobei die eine oder die mehreren ersten Zeit-Frequenz-Ressourcen der ersten Sendegelegenheit aus einem oder mehreren orthogonalen Frequenzmultiplexsymbolen eines Funkrahmens in einem oder mehreren Ressourcenblöcken bestehen, wobei das eine oder die mehreren Symbole in einem Zeitbereich benachbart sind, und der eine oder die mehreren Ressourcenblöcke in einem Frequenzbereich benachbart sind.

17. Computerprogrammprodukt, umfassend ein computerlesbares Medium (900), das ein Computerprogramm darauf aufweist, das Programmbefehle umfasst, wobei das Computerprogramm in eine Datenverarbeitungseinheit (930) geladen werden kann und so ausgelegt ist, dass es die Ausführung des Verfahren nach einem der Ansprüche 1 bis 16 bewirkt, wenn das Computerprogramm durch die Datenverarbeitungseinheit (930) ausgeführt wird.

18. Anordnung eines Netzknotens eines zellularen Kommunikationssystem, der zum Kommunizieren mit einer drahtlosen Kommunikationsvorrichtung ausgelegt ist, wobei die Anordnung umfasst:
einen Signalverarbeitungsfähigkeitsdetektor (524), der so ausgelegt ist, dass er eine Signalverarbeitungsfähigkeit der drahtlosen Kommunikationsvorrichtung erfasst;
einen Scheduler (522), der so ausgelegt ist, dass er basierend auf der erfassten Signalverarbeitungsfähigkeit eine oder mehrere erste Zeit-Frequenz-Ressourcen einer ersten Sendegelegenheit zur Übertragung an die drahtlose Kommunikationsvorrichtung disponiert, wobei die erste Sendegelegenheit in einer ersten Kommunikationsgelegenheit zwischen dem Netzknoten und der drahtlosen Kommunikationsvorrichtung enthalten ist;
einen Zeitintervall-Längenbestimmer (526), der so ausgelegt ist, dass er basierend auf der erfassten Signalverarbeitungsfähigkeit eine Länge eines Zeitintervalls zwischen der ersten und einer zweiten Kommunikationsgelegenheit zwischen dem Netzknoten und der drahtlosen Kommunikationsvorrichtung bestimmt, wobei, wenn die erfasste Signalverarbeitungsfähigkeit eine Signalverarbeitungsfähigkeitsanforderung nicht erfüllt, die Länge des Zeitintervalls derart bestimmt wird, dass eine erste Länge ausgewählt wird, wenn die eine oder die mehreren disponierten ersten Zeit-Frequenz-Ressourcen eine erste Frequenzspanne aufweisen, und eine zweite Länge ausgewählt wird, wenn die eine oder die mehreren disponierten ersten Zeit-Frequenz-Ressourcen eine zweite Frequenzspanne aufweisen, wobei die erste Länge die zweite Länge überschreitet, und die erste Frequenzspanne die zweite Frequenzspanne überschreitet; und
einen Sendeempfänger (520), der ausgelegt ist zum:
Senden von Daten an die drahtlose Kommunikationsvorrichtung während der ersten Sendegelegenheit unter Verwendung der einen oder der mehreren disponierten ersten Zeit-Frequenz-Ressourcen; und
Durchführen eines Kommunikationsvorgangs zwischen dem Netzknoten und der drahtlosen Kommunikationsvorrichtung während der zweiten Kommunikationsgelegenheit.

19. Anordnung nach Anspruch 18, wobei der Sendeempfänger (520) so ausgelegt ist, dass er eine Fähigkeitsnachricht von der drahtlosen Kommunikationsvorrichtung empfängt, und der Signalverarbeitungsfähigkeitsdetektor (524) so ausgelegt ist, dass er die Signalverarbeitungsfähigkeit basierend auf der empfangenen Fähigkeitsnachricht bestimmt.

20. Anordnung nach Anspruch 18, wobei der Sendeempfänger (520) so ausgelegt ist, dass er eine Mehrzahl von Antwortnachrichten von der drahtlosen Kommunikationsvorrichtung empfängt, wobei jede Antwortnachricht eine Bestätigung oder eine Nichtbestätigung umfasst, und der Signalverarbeitungsfähigkeitsdetektor (524) so ausgelegt ist, dass er die Signalverarbeitungsfähigkeit basierend auf einer Häufigkeit von Nichtbestätigungen in der empfangenen Mehrzahl von Antwortnachrichten bestimmt.

21. Anordnung nach einem der Ansprüche 18 bis 20, wobei der Sendeempfänger (520) so ausgelegt ist, dass er den Kommunikationsvorgang zwischen dem Netzknoten und der drahtlosen Kommunikationsvorrichtung während der zweiten Kommunikationsgelegenheit durch Senden von Daten an die drahtlose Kommunikationsvorrichtung während einer zweiten Sendegelegenheit unter Verwendung einer oder mehrerer disponierter zweiter Zeit-Frequenz-Ressourcen der zweiten Sendegelegenheit durchführt, wobei die zweite Sendegelegenheit in der zweiten Kommunikationsgelegenheit enthalten ist.

22. Anordnung nach einem der Ansprüche 18 bis 21, wobei der Sendeempfänger (520) so ausgelegt ist, dass er den Kommunikationsvorgang zwischen dem Netzknoten und der drahtlosen Kommunikationsvorrichtung während der zweiten Kommunikationsgelegenheit durch Empfangen einer mit der ersten Sendegelegenheit assoziierten Antwortnachricht von der drahtlosen Kommunikationsvorrichtung während der zweiten Kommunikationsgelegenheit durchführt, wobei die Antwortnachricht eine Bestätigung oder eine Nichtbestätigung umfasst.

23. Netzknoten eines zellularen Kommunikationssystem, der zum Kommunizieren mit einer drahtlosen Kommunikationsvorrichtung ausgelegt ist, wobei der Netzknoten die Anordnung nach einem der Ansprüche 18 bis 22 umfasst.

24. Anordnung einer drahtlosen Kommunikationsvorrichtung, die zum Kommunizieren mit einem Netzknoten eines zellularen Kommunikationssystems ausgelegt ist, wobei die Anordnung umfasst:
eine oder mehrere Signalverarbeitungseinheiten (541, 542, 643, 644, 645, 646, 647, 648, 649, 743, 744, 745), die so ausgelegt sind, dass sie Vorgänge in Bezug auf ein Empfangssignal durchführen, wobei die eine oder die mehreren Signalverarbeitungseinheiten eine Signalverarbeitungsfähigkeit der drahtlosen Kommunikationsvorrichtung definieren;
einen Sendeempfänger (540), der ausgelegt ist zum:
Senden von Informationen, welche die Signalverarbeitungsfähigkeit anzeigen;
Empfangen vom Netzknoten einer Zeitplanung einer oder mehrerer erster Zeit-Frequenz-Ressourcen einer ersten Empfangsgelegenheit, wobei die erste Empfangsgelegenheit in einer ersten Kommunikationsgelegenheit zwischen dem Netzknoten und der drahtlosen Kommunikationsvorrichtung enthalten ist;
Empfangen von Daten vom Netzknoten während der ersten Empfangsgelegenheit in der einen oder den mehreren disponierten ersten Zeit-Frequenz-Ressourcen; und
Durchführen eines Kommunikationsvorgangs zwischen dem Netzknoten und der drahtlosen Kommunikationsvorrichtung während einer zweiten Kommunikationsgelegenheit;
einen Zeitintervall-Längenbestimmer (546), der so ausgelegt ist, dass er eine Länge eines Zeitintervalls zwischen der ersten und zweiten Kommunikationsgelegenheit zwischen dem Netzknoten und der drahtlosen Kommunikationsvorrichtung bestimmt, wobei, wenn die Signalverarbeitungsfähigkeit eine Signalverarbeitungsfähigkeitsanforderung nicht erfüllt, die Länge des Zeitintervalls derart bestimmt wird, dass eine erste Länge ausgewählt wird, wenn die eine oder die mehreren disponierten ersten Zeit-Frequenz-Ressourcen eine erste Frequenzspanne aufweisen, und eine zweite Länge ausgewählt wird, wenn die eine oder die mehreren disponierten ersten Zeit-Frequenz-Ressourcen eine zweite Frequenzspanne aufweisen, wobei die erste Länge die zweite Länge überschreitet, und die erste Frequenzspanne die zweite Frequenzspanne überschreitet.

25. Drahtlose Kommunikationsvorrichtung, umfassend die Anordnung nach Anspruch 24.

## Revendications

1. Procédé d'un noeud de réseau d'un système de communication cellulaire adaptée pour communiquer avec un dispositif de communication sans fil, le procédé comprenant de :
acquérir (110, 310) une capacité de traitement de signal du dispositif de communication sans fil ;
programmer (120, 320), sur la base de la capacité de traitement de signal acquise, une ou plusieurs premières ressources temps-fréquence d'une première occasion de transmission à des fins de transmission vers le dispositif de communication sans fil, dans lequel la première occasion de transmission est comprise dans une première occasion de communication entre le noeud de réseau et le dispositif de communication sans fil ;
déterminer (130, 330), sur la base de la capacité de traitement de signal acquise, une longueur d'un intervalle de temps entre la première et une seconde occasion de communication entre le noeud de réseau et le dispositif de communication sans fil ;
transmettre (150, 350) les données au dispositif de communication sans fil pendant la première occasion de transmission en utilisant une ou plusieurs premières ressources temps-fréquence programmées ;
effectuer (180, 381, 383, 384) une opération de communication entre le noeud de réseau et le dispositif de communication sans fil pendant la seconde occasion de communication ;
dans lequel, si la capacité de traitement de signal acquise ne satisfait pas à une exigence de capacité de traitement de signal, la longueur de l'intervalle de temps est déterminée de sorte qu'une première longueur est sélectionnée si une ou plusieurs premières ressources temps-fréquence programmées ont une première plage de fréquence et une seconde longueur est sélectionnée si une ou plusieurs premières ressources temps-fréquence programmées ont une seconde plage de fréquence, dans lequel la première longueur excède la deuxième longueur et la première plage de fréquence excède la seconde plage de fréquence.

2. Procédé selon la revendication 1, dans lequel acquérir (110, 310) la capacité de traitement de signal du dispositif de communication sans fil comprend de recevoir (310) un message de capacité (411) provenant du dispositif de communication sans fil, le message de capacité comprenant une information indiquant la capacité de traitement de signal.

3. Procédé selon la revendication 2, dans lequel le message de capacité (411) comprend une information indiquant un ou plusieurs paramètres de traitement de signal du dispositif de communication sans fil.

4. Procédé selon la revendication 3, dans lequel le ou les paramètres de traitement de signal comprennent un ou plusieurs de :
une capacité d'une implémentation de transformée de Fourier rapide du dispositif de communication sans fil ;
une capacité de traitement d'un décodeur du dispositif de communication sans fil ;
une capacité d'estimation de canal du dispositif de communication sans fil ;
une capacité de traitement d'une unité de compensation de canal du dispositif de communication sans fil ; et
un niveau de batterie du dispositif de communication sans fil.

5. Procédé selon la revendication 1, dans lequel acquérir (110) la capacité de traitement de signal du dispositif de communication sans fil comprend de :
recevoir une pluralité de messages de réponse provenant du dispositif de communication sans fil, chaque message de réponse comprenant un accusé de réception ou un accusé de non réception ; et
déterminer la capacité de traitement de signal sur la base d'une fréquence d'accusés de non réception dans la pluralité reçue de messages de réponse.

6. Procédé selon une quelconque des revendications 1 à 5, dans lequel effectuer (180, 383, 384) 1"opération de communication entre le noeud de réseau et le dispositif de communication sans fil pendant la seconde occasion de communication comprend de :
programmer (383) une ou plusieurs secondes ressources temps-fréquence d'une seconde occasion de transmission à des fins de transmission vers le dispositif de communication sans fil, dans lequel la seconde occasion de transmission est comprise dans la seconde occasion de communication ; et
transmettre (384) des données vers le dispositif de communication sans fil pendant la seconde occasion de transmission en utilisant la ou les secondes ressources temps-fréquence programmées.

7. Procédé selon une quelconque des revendications 1 à 6, dans lequel effectuer (180, 381) l'opération de communication entre le noeud de réseau et le dispositif de communication sans fil pendant la seconde occasion de communication comprend de :
recevoir (381) un message de réponse (482) associé à la première occasion de transmission provenant du dispositif de communication sans fil pendant la seconde occasion de communication, le message de réponse (482) comprenant un accusé de réception ou un accusé de non réception.

8. Procédé d'un dispositif de communication sans fil adapté pour communiquer avec un noeud de réseau d'un système de communication cellulaire, le procédé comprenant de :
transmettre (210, 410) une information indiquant une capacité de traitement de signal du dispositif de communication sans fil ;
recevoir (240, 450) depuis le noeud de réseau, une programmation d'une ou plusieurs premières ressources temps-fréquence d'une première occasion de réception, dans lequel la première occasion de réception est comprise dans une première occasion de communication entre le noeud de réseau et le dispositif de communication sans fil ;
recevoir (250, 450) des données provenant du noeud de réseau pendant la première occasion de réception dans la ou les premières ressources temps-fréquence programmées ;
déterminer (260, 460) une longueur d'un intervalle de temps entre la première et une seconde occasion de communication entre le noeud de réseau et le dispositif de communication sans fil ; et
effectuer (280, 481, 484) une opération de communication entre le noeud de réseau et le dispositif de communication sans fil pendant la seconde occasion de communication ;
dans lequel, si la capacité de traitement de signal de satisfait pas à une exigence de capacité de traitement de signal, la longueur de l'intervalle de temps est déterminée de telle sorte qu'une première longueur est sélectionnée si une ou plusieurs premières ressources temps-fréquence programmées ont une première plage de fréquence et une seconde longueur est sélectionnée si une ou plusieurs premières ressources temps-fréquence programmées ont une seconde plage de fréquence, dans lequel la première longueur excède la deuxième longueur et la première plage de fréquence excède la seconde plage de fréquence.

9. Procédé selon la revendication 8, dans lequel transmettre (210, 410) une information indiquant une capacité de traitement de signal du dispositif de communication sans fil comprend de transmettre (410) un message de capacité (411) au noeud de réseau, le message de capacité comprenant l'information.

10. Procédé selon la revendication 9, dans lequel le message de capacité (411) comprend une information indiquant un ou plusieurs paramètres de traitement de signal du dispositif de communication sans fil.

11. Procédé selon la revendication 10, dans lequel le les paramètres de traitement de signal comprennent un ou plusieurs de :
une capacité d'une implémentation de transformée de Fourier rapide du dispositif de communication sans fil ;
une capacité de traitement d'un décodeur du dispositif de communication sans fil ;
une capacité d'estimation de canal du dispositif de communication sans fil ;
une capacité de traitement d'une unité de compensation de canal du dispositif de communication sans fil ; et
un niveau de batterie du dispositif de communication sans fil.

12. Procédé selon une quelconque des revendications 8 à 11, dans lequel effectuer (280, 484) l'opération de communication entre le noeud de réseau et le dispositif de communication sans fil pendant la seconde occasion de communication comprend de :
recevoir (484) depuis le noeud de réseau, une programmation d'une ou plusieurs secondes ressources temps-fréquence d'une seconde occasion de réception, dans lequel la seconde occasion de réception est comprise dans la seconde occasion de communication ; et
recevoir (484) des données provenant du noeud de réseau pendant la seconde occasion de réception dans une ou plusieurs secondes ressources temps-fréquence programmées.

13. Procédé selon une quelconque des revendications 8 à 12, dans lequel effectuer (280, 481) l'opération de communication entre le noeud de réseau et le dispositif de communication sans fil pendant la seconde occasion de communication comprend de :
transmettre (481) un message de réponse (482) associé à la première occasion de réception au noeud de réseau pendant la seconde occasion de communication, le message de réponse (482) comprenant un accusé de réception ou un accusé de non réception.

14. Procédé selon une quelconque des revendications 1 à 13, dans lequel le procédé est appliqué dans un système forme à la norme de Télécommunications Mobiles Universelles - évolution à long terme.

15. Procédé selon la revendication 14, dans lequel une ou plusieurs premières ressources temps-fréquence de la première occasion de transmission sont constituées d'une ou plusieurs sous-trames d'une trame radio dans un ou plusieurs blocs de ressources, la ou les sous-trames étant adjacentes dans un domaine temporel et le ou les blocs de ressources étant adjacents dans un domaine de fréquence.

16. Procédé selon la revendication 14, dans lequel la ou les premières ressources temps-fréquence de la première occasion de transmission sont constitués d'un ou plusieurs symboles de multiplexage par répartition de fréquence orthogonale d'une trame radio dans un ou plusieurs blocs de ressources, le ou les symboles étant adjacents dans un domaine temporel et le ou les blocs de ressources étant adjacents dans un domaine de fréquence.

17. Produit de programmes informatique comprenant un support lisible par ordinateur (900), renfermant un programme informatique comprenant des instructions du programme, le programme informatique étant chargeables dans une unité de traitement de données (930) et adapté pour provoquer l'exécution du procédé selon une quelconque des revendications 1 à 16 quand le programme informatique est exécuté par l'unité de traitement de données (930).

18. Agencement d'un noeud de réseau d'un système de communication cellulaire adapté pour communiquer avec un dispositif de communication sans fil, l'agencement comprenant :
un détecteur de capacité de traitement de signal (524) adapté pour acquérir une capacité de traitement de signal du dispositif de communication sans fil ;
un programmateur (522) adapté pour programmer, sur la base de la capacité de traitement de signal acquise, une ou plusieurs premières ressources temps-fréquence d'une première occasion de transmission à des fins de transmission vers le dispositif de communication sans fil, dans lequel la première occasion de transmission est comprise dans une première occasion de communication entre le noeud de réseau et le dispositif de communication sans fil ;
un déterminateur de longueur d'intervalles de temps (526) adapté pour déterminer, sur la base de la capacité de traitement de signal acquise, une longueur d'un intervalle de temps entre la première et une seconde occasion de communication entre le noeud de réseau et le dispositif de communication sans fil, dans lequel, si la capacité de traitement de signal acquise ne satisfait pas à une exigence de capacité de traitement de signal, la longueur de l'intervalle de temps est déterminée de sorte qu'une première longueur est sélectionnée si une ou plusieurs premières ressources temps-fréquence programmées ont une première plage de fréquence et une seconde longueur est sélectionnée si une ou plusieurs premières ressources temps-fréquence programmées ont une seconde plage de fréquence, dans lequel la première longueur excède la deuxième longueur et la première plage de fréquence excède la seconde plage de fréquence ;
un émetteur/récepteur (520) adapté pour :
transmettre les données au dispositif de communication sans fil pendant la première occasion de transmission en utilisant une ou plusieurs premières ressources temps-fréquence programmées ;
effectuer une opération de communication entre le noeud de réseau et le dispositif de communication sans fil pendant la seconde occasion de communication.

19. Agencement selon la revendication 18, dans lequel l'émetteur/récepteur (520) est adapté pour recevoir un message de capacité provenant du dispositif de communication sans fil et le détecteur de capacité de traitement de signal (524) est adapté pour déterminer la capacité de traitement de signal sur la base du message de capacité reçu.

20. Agencement selon la revendication 18, dans lequel l'émetteur/récepteur (520) est adapté pour recevoir une pluralité de messages de réponse provenant du dispositif de communication sans fil, chaque message de réponse comprenant un accusé de réception ou un accusé de non réception et le détecteur de capacité de traitement de signal (524) est adapté pour déterminer la capacité de traitement du signal sur la base d'une fréquence d'accusé de non réception dans la pluralité reçue de messages de réponse.

21. Agencement selon une quelconque des revendications 18 à 20, dans lequel l'émetteur/récepteur (520) est adapté pour effectuer l'opération de communication entre le noeud de réseau et le dispositif de communication sans fil pendant la seconde occasion de communication en transmettant des données au dispositif de communication sans fil pendant une seconde occasion de transmission en utilisant une ou plusieurs secondes ressources temps-fréquence programmées de la seconde occasion de transmission, dans lequel la seconde occasion de transmission est comprise dans la seconde occasion de communication.

22. Agencement selon une quelconque des revendications 18 à 21, dans lequel l'émetteur/récepteur (520) est adapté pour effectuer l'opération de communication entre le noeud de réseau et le dispositif de communication sans fil pendant la seconde occasion de communication en recevant un message de réponse associé à la première occasion de transmission provenant du dispositif de communication sans fil pendant la seconde occasion de communication, le message de réponse comprenant un accusé de réception ou un accusé de non réception.

23. Noeud de réseau d'un système de communication cellulaire adapté pour communiquer avec un dispositif de communication sans fil, le noeud de réseau comprenant l'agencement selon une quelconque des revendications 18 à 22.

24. Agencement d'un dispositif de communication sans fil adapté pour communiquer avec un noeud de réseau d'un système de communication cellulaire, l'agencement comprenant :
une ou plusieurs unités de traitement de signal (541, 542, 643, 644, 645, 646, 647, 648, 649, 743, 744, 745) adaptées pour effectuer des opérations en relation avec un signal reçu, l'unité ou les unités de traitement de signal définissant une capacité de traitement des signal du dispositif de communication sans fil ;
un émetteur/récepteur (540) adapté pour :
transmettre une information indiquant la capacité de traitement de signal ;
recevoir, depuis le noeud de réseau, une programmation d'une ou plusieurs premières ressources temps-fréquence d'une première occasion de réception, dans lequel la première occasion de réception est comprise dans une première occasion de communication entre le noeud de réseau et le dispositif de communication sans fil ;
recevoir des données provenant du noeud de réseau pendant la première occasion de réception dans une ou plusieurs premières ressources temps-fréquence programmées ; et
effectuer une opération de communication entre le noeud de réseau et le dispositif de communication sans fil pendant une seconde occasion de communication ;
un déterminateur de longueur d'intervalles de temps (546) adapté pour déterminer une longueur d'un intervalle de temps entre la première et une seconde occasion de communication entre le noeud de réseau et le dispositif de communication sans fil, dans lequel, si la capacité de traitement de signal acquise ne satisfait pas à une exigence de capacité de traitement de signal, la longueur de l'intervalle de temps est déterminée de sorte qu'une première longueur est sélectionnée si une ou plusieurs premières ressources temps-fréquence programmées ont une première plage de fréquence et une seconde longueur est sélectionnée si une ou plusieurs premières ressources temps-fréquence programmées ont une seconde plage de fréquence, dans lequel la première longueur excède la deuxième longueur et la première plage de fréquence excède la seconde plage de fréquence.

25. Dispositif de communication sans fil comprenant l'agencement selon la revendication 24.
